# EUROPEAN PATENT APPLICATION

(11) **EP 4 831 501 A1**
(43) Date of publication of application: **28.10.2026**
(21) Application number: 24923663.9
(22) Date of filing: 27.12.2024
(51) Int. Cl.: F16C 33/51, F16C 19/36, F16C 33/66

(54) **ROLLING BEARING**

(30) Priority: 09.02.2024 JP 2024018553
(71) Applicant: Nippon Thompson Co., Ltd., Tokyo 108-8586 (JP)
(72) Inventor: IWATA Tamotsu, Mino-shi, Gifu 501-3763 (JP)
(74) Representative: Isarpatent
(86) International application number: PCT/JP2024/046306
(87) International publication number: WO 2025/169638

(57) **Abstract**

A rolling bearing includes: an outer ring having an outer rolling surface included in an inner peripheral surface; an inner ring having an inner rolling surface included in an outer peripheral surface and facing the outer rolling surface; a plurality of rolling elements capable of rolling with respect to the inner rolling surface and the outer rolling surface; and a separator located between adjacent ones of the rolling elements. The separator includes a lubricating portion having a first surface oriented in a first direction in circumferential directions along a pitch circle of the rolling elements, a second surface oriented in a second direction opposite to the first direction in the circumferential directions, an inner peripheral surface extending from the first surface to the second surface, and an outer peripheral surface being continuous with outer peripheral edges of the first surface and the second surface, a rotation body rotatably retained with respect to the inner peripheral surface of the lubricating portion, including a main portion located in a through hole, a first projection projecting from the first surface, a second projection projecting from the second surface, and having a hardness higher than a hardness of the lubricating portion, and a protective portion located on the outer peripheral surface of the lubricating portion and having a hardness higher than the hardness of the lubricating portion.

## Description

### Technical Field

The present disclosure relates to a rolling bearing. This application claims priority to Japanese Patent Application No. 2024-018553, which was filed on February 9, 2024, and is incorporated herein by reference in its entirety.

### Background Art

A rolling bearing including an outer ring, an inner ring, a plurality of rolling elements, and a plurality of separators is known in the art (see, for example, Patent Literature 1). Each of the separators described in Patent Literature 1 is arranged between adjacent ones of the rolling elements. Each separator includes only a solid lubricant. The separator comes into contact with the adjacent rolling elements so that the solid lubricant is thereby supplied to the rolling elements.

### Citation List

### Patent Literature

Patent Literature 1: Japanese Patent Application Publication No. 2013-32838

### Summary of Invention

### Technical Problem

It is required to suppress wear of the separators due to contact with the rolling elements.

The present disclosure provides a rolling bearing capable of suppressing wear of separators while supplying a lubricant to rolling elements.

### Solution to Problems

A rolling bearing according to the present disclosure includes: an outer ring having an outer rolling surface included in an inner peripheral surface of the outer ring; an inner ring located on an inner peripheral side of the outer ring, and having an inner rolling surface, the inner rolling surface being included in an outer peripheral surface of the inner ring and facing the outer rolling surface, the inner ring having a center axis that coincides with a center axis of the outer ring; a plurality of rolling elements located between the outer ring and the inner ring, the rolling elements being capable of rolling with respect to the inner rolling surface and the outer rolling surface; and a separator located between the outer ring and the inner ring and located between adjacent ones of the rolling elements.

The separator includes a lubricating portion having a first surface, a second surface, an inner peripheral surface, and an outer peripheral surface, and including a lubricant, the first surface being oriented in a first direction in circumferential directions along a pitch circle of the rolling elements, the second surface oriented in a second direction opposite to the first direction in the circumferential directions, the inner peripheral surface extending from the first surface to the second surface, the outer peripheral surface being continuous with outer peripheral edges of the first surface and the second surface, a rotation body rotatably retained with respect to the inner peripheral surface of the lubricating portion, including a main portion, a first projection, and a second projection, and having a hardness higher than a hardness of the lubricating portion, the main portion being located in a through hole defined by the inner peripheral surface of the lubricating portion and being in contact with the inner peripheral surface of the lubricating portion, the first projection being continuous with the main portion and projecting from the first surface, the second projection being continuous with the main portion and projecting from the second surface, and a protective portion located on the outer peripheral surface of the lubricating portion and having a hardness higher than the hardness of the lubricating portion.

### Advantages of the Invention

The rolling bearing according to the present disclosure is capable of suppressing wear of a lubricating portion while supplying a lubricant to rolling elements.

### Brief Description of Drawings

[FIG. 1] FIG. 1 is a perspective view of a rolling bearing according to one embodiment of the present disclosure.
[FIG. 2] FIG. 2 is a cross-sectional view of the rolling bearing illustrated in FIG. 1 taken along a plane including a center axis.
[FIG. 3] FIG. 3 is a side view of the rolling bearing illustrated in FIG. 1 when seen in the radial direction.
[FIG. 4] FIG. 4 is a perspective view of rolling elements and separators illustrated in FIG. 1.
[FIG. 5] FIG. 5 is a perspective view of the separator illustrated in FIG. 4.
[FIG. 6] FIG. 6 is a cross-sectional view of the separator illustrated in FIG. 5. FIG. 6 is a cross-sectional view orthogonal to a plane along a pitch circle.
[FIG. 7] FIG. 7 is a cross-sectional view of the separator illustrated in FIG. 5. FIG. 7 is a cross-sectional view along a plane along the pitch circle.
[FIG. 8] FIG. 8 is an enlarged cross-sectional view of a protrusion illustrated in FIG. 7.
[FIG. 9] FIG. 9 is an enlarged cross-sectional view of a protrusion of a first variation.
[FIG. 10] FIG. 10 is an enlarged cross-sectional view of a protrusion of a second variation.
[FIG. 11] FIG. 11 is an enlarged cross-sectional view of a protrusion of a third variation.
[FIG. 12] FIG. 12 is an enlarged cross-sectional view of a protrusion of a fourth variation.

### Description of Embodiments

### Summary of Embodiment

A rolling bearing according to the present disclosure includes: an outer ring having an outer rolling surface included in an inner peripheral surface of the outer ring; an inner ring located on an inner peripheral side of the outer ring, and having an inner rolling surface, the inner rolling surface being included in an outer peripheral surface of the inner ring and facing the outer rolling surface, the inner ring having a center axis that coincides with a center axis of the outer ring; a plurality of rolling elements located between the outer ring and the inner ring, the rolling elements being capable of rolling with respect to the inner rolling surface and the outer rolling surface; and a separator located between the outer ring and the inner ring and located between adjacent ones of the rolling elements.

The separator includes a lubricating portion having a first surface, a second surface, an inner peripheral surface, and an outer peripheral surface, and including a lubricant, the first surface being oriented in a first direction in circumferential directions along a pitch circle of the rolling elements, the second surface oriented in a second direction opposite to the first direction in the circumferential directions, the inner peripheral surface extending from the first surface to the second surface, the outer peripheral surface being continuous with outer peripheral edges of the first surface and the second surface, a rotation body rotatably retained with respect to the inner peripheral surface of the lubricating portion, including a main portion, a first projection, and a second projection, and having a hardness higher than a hardness of the lubricating portion, the main portion being located in a through hole defined by the inner peripheral surface of the lubricating portion and being in contact with the inner peripheral surface of the lubricating portion, the first projection being continuous with the main portion and projecting from the first surface, the second projection being continuous with the main portion and projecting from the second surface, and a protective portion located on the outer peripheral surface of the lubricating portion and having a hardness higher than the hardness of the lubricating portion.

In this rolling bearing, the lubricant is supplied to the rolling elements via the rotation body. The first projection of the rotation body is capable of being in contact with the rolling elements oriented in the first direction with respect to the first projection. The second projection of the rotation body is capable of being in contact with the rolling elements oriented in the second direction with respect to the second projection. Therefore, contact of the lubricant with the rolling elements oriented in the first direction with respect to the first projection, and with the rolling elements oriented in the second direction with respect to the second projection is suppressed. This suppresses wear of the first and second surfaces of the lubricating portion.

The protective portion is capable of being in contact with the inner rolling surface and the outer rolling surface. This suppresses wear of the outer peripheral surface of the lubricating portion. Consequently, in this rolling bearing, it is possible to suppress wear of the lubricating portion while supplying the lubricant to the rolling elements.

In the rolling bearing described above, the rotation body may be spherical. This rolling bearing is suitable as a crossed roller bearing. In this rolling bearing, even in a case where rotation axes of adjacent rolling elements are not parallel, the rotation body is less likely to be an excessive resistance to rolling of the rolling elements.

In the rolling bearing described above, the lubricating portion may further include a porous material that retains the lubricant and is capable of supplying the lubricant to the rotation body. In this rolling bearing, the lubricant is supplied to the rolling elements from the porous material over a long period. Compared to the rolling bearing described in Patent Document 1 that includes only a solid lubricant, wear of the lubricating portion including the porous material is further suppressed.

In the rolling bearing described above, a material for the rotation body may be a metal. In this rolling bearing, wear of the lubricating portion can be effectively suppressed.

In the rolling bearing described above, a material for the protective portion may be a resin or a metal. Resins and metals are suitable as materials for the protective portion.

In the rolling bearing described above, the lubricating portion may have a ring shape. In this case, the configuration of the lubricating portion is simple.

In the rolling bearing described above, one of the lubricating portion and the protective portion may include a protrusion, and another of the lubricating portion and the protective portion may include a recess in which the protrusion fits. In this rolling bearing, since the protrusion fits in the recess, detachment of the protective portion from the lubricating portion can be suppressed.

In the rolling bearing described above, one of the protrusion and the recess may be continuous with the entire outer peripheral surface in a circumferential direction. The rolling bearing has a simple configuration and can effectively suppress the detachment described above.

In the rolling bearing described above, the protective portion may include a base, and a protrusion projecting from the base toward the main portion of the rotation body. When the rolling bearing is used for a long period, the main part moves toward the protective portion while pressing the lubricating portion in some cases. However, in the rolling bearing according to the present disclosure, the protrusion can suppress movement of the main portion toward the base while being supported by the base.

In the rolling bearing described above, the protrusion may include a third portion extending from the base toward the main portion, and a fourth portion connected to a distal end portion of the third portion and extending in a direction intersecting with a direction in which the third portion extends. In this rolling bearing, the fourth portion can enhance rigidity of the protective portion.

In the rolling bearing described above, the fourth portion may include a first part extending from the distal end portion toward the first surface, and a second part extending from the distal end portion toward the second surface. In this rolling bearing, the first part and the second part can further enhance rigidity of the protective portion.

In the rolling bearing described above, the fourth portion may extend to form a right angle or an obtuse angle with respect to the direction in which the third portion extends. In this rolling bearing, the fourth portion can further suppress detachment of the protective portion from the lubricating portion, and the lubricating portion between the base and the fourth portion can contain a sufficient amount of the lubricant.

In the rolling bearing described above, the fourth portion may extend to form a right angle with respect to the direction in which the third portion extends. In this rolling bearing, the fourth portion can be easily shaped and has a simple configuration.

In the rolling bearing described above, the fourth portion may extend such that a distance between the fourth portion and the main portion is less than or equal to a distance between the distal end and the main portion. In this rolling bearing, in the fourth portion, the first part and the second part can suppress movement of the main portion toward the first part and movement of the main portion toward the second part, respectively.

The rolling bearing described above may include a plurality of separators. In this rolling bearing, the lubricant is efficiently supplied to the plurality of rolling elements.

### [Specific Examples of Embodiments]

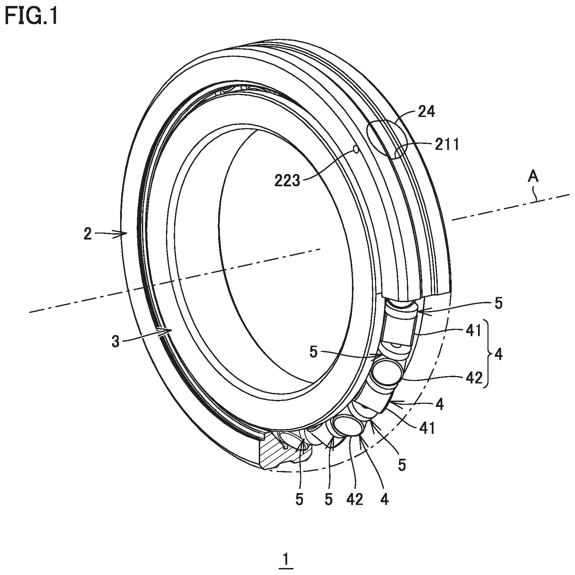

With reference to FIGS. 1 through 7, a specific example of a rolling bearing according to the present disclosure will be described.

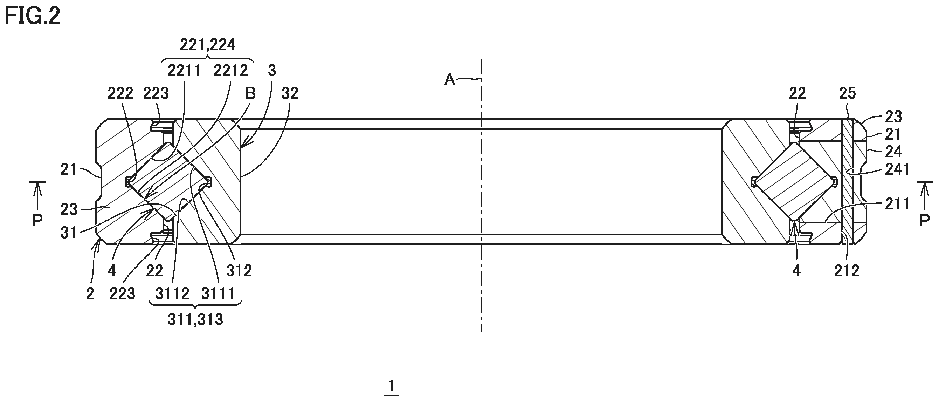

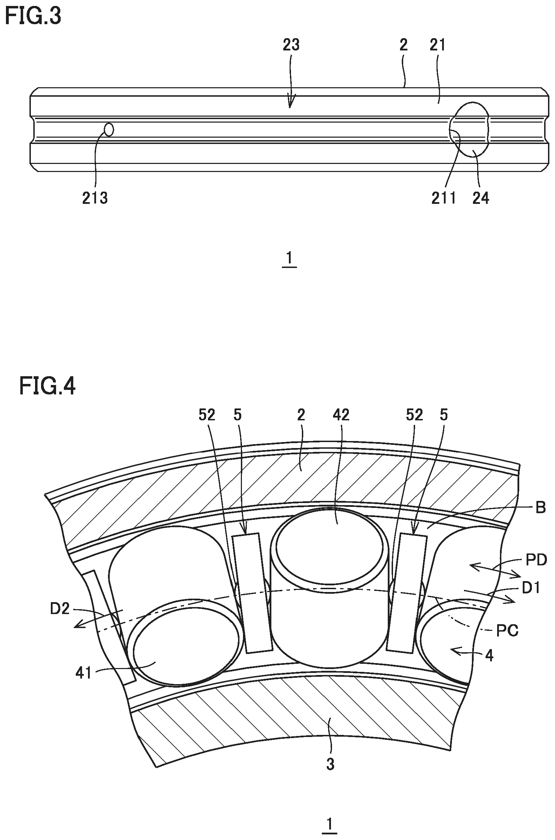

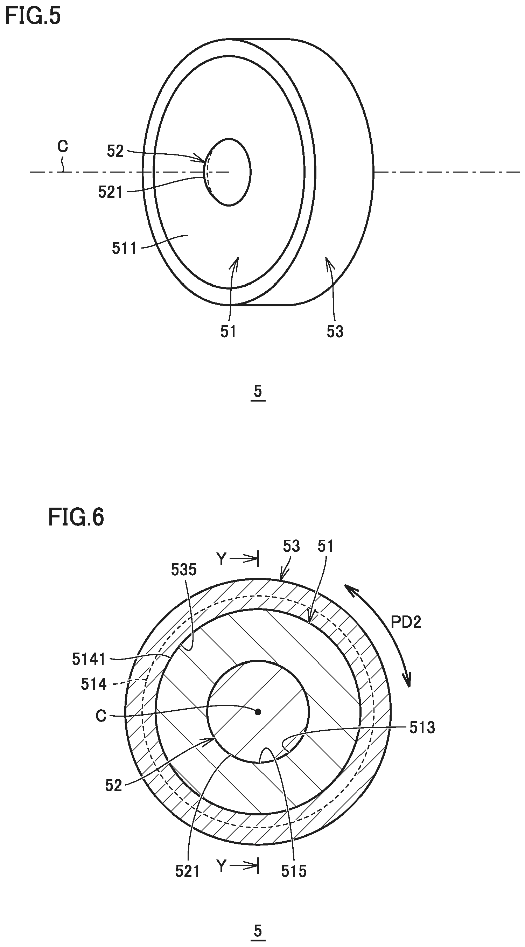

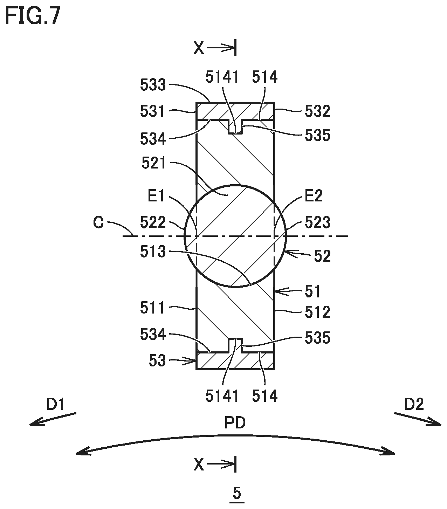

FIG. 1 is a perspective view of a rolling bearing according to one embodiment of the present disclosure. In FIG. 1, an outer ring is partially omitted. FIG. 2 is a cross-sectional view of the rolling bearing illustrated in FIG. 1 taken along a plane including a center axis. FIG. 3 is a side view of the rolling bearing illustrated in FIG. 1 when seen in the radial direction. FIG. 4 is a perspective view of rolling elements and separators. FIG. 5 is a perspective view of the separator illustrated in FIG. 4. Each of FIGS. 6 and 7 is a cross-sectional view of the separator illustrated in FIG. 5. FIG. 6 is a cross-sectional view orthogonal to a plane along a pitch circle. FIG. 6 is a cross-sectional view taken along line XX in FIG. 7. FIG. 7 is a cross-sectional view taken along a plane along the pitch circle. FIG. 7 is a cross-sectional view taken along line YY in FIG. 6.

### [Basic Configuration of Rolling Bearing 1]

As illustrated in FIG. 1, the rolling bearing 1 has a ring shape, for example. The rolling bearing 1 has a center axis A. The center axis A is a rotation axis of the rolling bearing 1. The rolling bearing 1 includes an outer ring 2, an inner ring 3, a plurality of rolling elements 4, and a plurality of separators 5.

### [Outer Ring 2]

The outer ring 2 is a race located on the outer side of the rolling bearing 1. The outer ring 2 has a ring shape. The outer ring 2 has a center axis that coincides with the center axis A of the rolling bearing 1. The outer ring 2 is made of a metal, preferably steel.

### [Inner Ring 3]

The inner ring 3 is a race located on the inner side of the rolling bearing 1. The inner ring 3 is located on the inner peripheral side of the outer ring 2. The inner ring 3 has a ring shape. The inner ring 3 has a center axis that coincides with the center axis A of the rolling bearing 1. The inner ring 3 is made of a metal, preferably, steel.

### [Rolling Elements 4]

The plurality of rolling elements 4 are located between the outer ring 2 and the inner ring 3. The plurality of rolling elements 4 are spaced from each other. The plurality of rolling elements 4 are arranged in the circumferential directions. The circumferential directions extend along the rotation direction of the rolling bearing 1. When the inner ring 3 rotates about the center axis A with respect to the outer ring 2, the plurality of rolling elements 4 roll while being in contact with the outer ring 2 and the inner ring 3. This enables the inner ring 3 to rotate with respect to the outer ring 2. That is, the outer ring 2 and the inner ring 3 are rotatable relative to each other.

### [Separators 5]

The plurality of separators 5 are located between the outer ring 2 and the inner ring 3. Each of the plurality of separators 5 is located between adjacent ones of the rolling elements 4. For example, the plurality of separators 5 are arranged in the circumferential directions. In the circumferential directions, the rolling elements 4 and the separators 5 are alternately arranged.

### [Details of Components]

### [Details of Outer Ring 2]

As illustrated in FIG. 2, the outer ring 2 includes an outer peripheral surface 21 and an inner peripheral surface 22. The outer ring 2 includes a body 23, a lid 24, and a pin 25.

The outer peripheral surface 21 constitutes the outer peripheral surface of the rolling bearing 1. The inner peripheral surface 22 is spaced apart from the outer peripheral surface 21 in the radial direction of the rolling bearing 1. The inner peripheral surface 22 faces the inner ring 3. The inner peripheral surface 22 includes an outer rolling surface 221, a relief groove 222, and a seal grooves 223.

The outer rolling surface 221 is located in an intermediate portion of the inner peripheral surface 22 in a cross section taken along a plane including the center axis A. The outer rolling surface 221 includes a first rolling surface 2211 and a second rolling surface 2212. The first rolling surface 2211 and the second rolling surface 2212 are arranged in a direction along the center axis A.

The first rolling surface 2211 is located on one side of the outer rolling surface 221 in the cross section taken along the plane including the center axis A.

The second rolling surface 2212 is located on the other side of the outer rolling surface 221 in the cross section taken along the plane including the center axis A. The second rolling surface 2212 is spaced apart from the first rolling surface 2211 in the cross section taken along the plane including the center axis A. A plane along the first rolling surface 2211 and a plane along the second rolling surface 2212 are orthogonal to each other in the cross section taken along the plane including the center axis A. The first rolling surface 2211 and the second rolling surface 2212 are plane-symmetrical with respect to a plane P orthogonal to the center axis A. The plane P is located between (at the center between) the first rolling surface 2211 and the second rolling surface 2212. The first rolling surface 2211 and the second rolling surface 2212 constitute an outer raceway groove 224. The outer raceway groove 224 has a V shape (or L shape) that is open radially inward in the cross section taken along the plane including the center axis A. A inflection point in the V shape (or L shape) is located on the plane P.

The relief groove 222 is located on a center portion of the inner peripheral surface 22 in the cross section taken along the plane including the center axis A. The relief groove 222 is located between the first rolling surface 2211 and the second rolling surface 2212. The relief groove 222 is not included in the outer raceway groove 224.

The seal grooves 223 are located at both ends of the inner peripheral surface 22 in the cross section taken along the plane including the center axis A. The two seal grooves 223 are connected to the first rolling surface 2211 and the second rolling surface 2212, respectively. Seal members (not shown) are fitted (press fitted) into the seal grooves 223. The seal members seal a raceway B described later.

The body 23 includes the outer peripheral surface 21 and the inner peripheral surface 22. The body 23 includes a first through hole 211, a second through hole 212, and a third through hole 213.

As illustrated in FIGS. 2 and 3, the first through hole 211 penetrates the body 23 in the radial direction.

The second through hole 212 penetrates the body 23 in the axial direction (direction parallel to the center axis A). The second through hole 212 communicates with the first through hole 211.

As illustrated in FIG. 3, the third through hole 213 is spaced apart from the first through hole 211 in the circumferential direction. The third through hole 213 penetrates the body 23 in the radial direction of the outer ring 2.

The outer surface of the lid 24 constitutes a portion of the outer peripheral surface 21 described above. That is, the outer surface of the lid 24 and the outer surface of the body 23 are included in the outer peripheral surface 21 described above. The lid 24 closes the first through hole 211. As illustrated in FIG. 2, the lid 24 includes a fourth through hole 241. The fourth through hole 241 penetrates the lid 24 in the axial direction (direction parallel to the center axis A). In the state where the lid 24 closes the first through hole 211, the fourth through hole 241 communicates with the second through hole 212.

The pin 25 is press fitted into the second through hole 212 and the fourth through hole 241 in the state where the lid 24 closes the first through hole 211. In this manner, the lid 24 is fixed to the body 23.

### [Details of Inner Ring 3]

The inner ring 3 includes an outer peripheral surface 31 and an inner peripheral surface 32. The outer peripheral surface 31 includes an inner rolling surface 311 and a relief groove 312.

The inner rolling surface 311 faces the outer rolling surface 221 in the radial direction with respect to the center axis A. The inner rolling surface 311 includes a third rolling surface 3111 and a fourth rolling surface 3112. The third rolling surface 3111 and the fourth rolling surface 3112 are arranged in a direction along the center axis A.

The third rolling surface 3111 is located on one side of the inner rolling surface 311 in the cross section taken along the plane including the center axis A. The third rolling surface 3111 extends along the second rolling surface 2212. Specifically, the third rolling surface 3111 is parallel to the second rolling surface 2212.

The fourth rolling surface 3112 is located on the other side of the inner rolling surface 311 in the cross section taken along the plane including the center axis A. The fourth rolling surface 3112 is spaced apart from the third rolling surface 3111 in the cross section taken along the plane including the center axis A. A plane along the third rolling surface 3111 and a plane along the fourth rolling surface 3112 are orthogonal to each other in the cross section taken along the plane including the center axis A. The third rolling surface 3111 and the fourth rolling surface 3112 are plane-symmetric with respect to the plane P described above. The fourth rolling surface 3112 extends along the first rolling surface 2211. Specifically, the fourth rolling surface 3112 is parallel to the first rolling surface 2211.

The third rolling surface 3111 and the fourth rolling surface 3112 constitute an inner raceway groove 313. The inner raceway groove 313 faces the outer raceway groove 224 in the radial direction. The outer raceway groove 224 and the inner raceway groove 313 constitute the raceway B. The raceway B is a space (passage) between the outer ring 2 and the inner ring 3. The raceway B has a ring shape.

The relief groove 312 is located on a center portion of the outer peripheral surface 31 in the cross section taken along the plane including the center axis A. The relief groove 312 is located between the third rolling surface 3111 and the fourth rolling surface 3112. The relief groove 312 is not included in the inner raceway groove 313.

### [Details of Rolling Elements 4]

The plurality of rolling elements 4 are located in the raceway B. Each of the plurality of rolling elements 4 is rollable with respect to the outer rolling surface 221 and the inner rolling surface 311. As illustrated in FIGS. 1 and 4, the plurality of rolling elements 4 include a plurality of first rolling elements 41 and a plurality of second rolling elements 42. The first rolling elements 41 and the second rolling elements 42 have the same shape. For example, each of the first rolling elements 41 and the second rolling elements 42 has a cylindrical shape. The first rolling elements 41 and the second rolling elements 42 have the same size. Each of the first rolling elements 41 and the second rolling elements 42 is made of a metal, preferably steel. Specifically, the first rolling elements 41 and the second rolling elements 42 are rollers.

The first rolling elements 41 and the second rolling elements 42 are alternately arranged in the circumferential directions of the rolling bearing 1. When an image is captured in a direction along a pitch circle PC, the center axes of adjacent ones of the first rolling elements 41 and the second rolling elements 42 are orthogonal to each other. The pitch circle PC is a circle passing through the center between both end surfaces of each first rolling element 41 in the radial direction of the rolling bearing 1 and through the center between the center of both end surfaces of each second rolling element 42 in a state where the plurality of first rolling elements 41 and the plurality of second rolling elements 42 are placed in the raceway B. A trajectory in which the center axes of the first rolling elements 41 move and a trajectory in which the center axes of the second rolling elements 42 move are orthogonal to each other in the cross section taken along the plane including the center axis A. Specifically, the rolling bearing 1 is a crossed roller bearing.

### [Details of Separators 5]

As illustrated in FIGS. 1 and 4, the separators 5 are located between the first rolling elements 41 and the second rolling elements 42. Specifically, the first rolling elements 41, the separator 5, the second rolling elements 42, and the separator 5 are arranged in this order in the circumferential directions. In the rolling bearing 1, units of the first rolling elements 41, the separators 5, the second rolling elements 42, and the separators 5 are repeatedly arranged in the circumferential direction. As illustrated in FIGS. 5 and 6, each of the plurality of separators 5 has a circular plate (disc) shape. Each separator 5 has a center axis C. The center axis C extends along the pitch circle PC. Each of the plurality of separators 5 includes a lubricating portion 51, a rotation body 52, and a protective portion 53.

### <Lubricating Portion 51>

The lubricating portion 51 has a ring shape. The lubricating portion 51 has a circular plate (disc) shape. For example, the lubricating portion 51 has a center axis that coincides with the center axes C of the separators 5. As illustrated in FIG. 7, the lubricating portion 51 includes a first surface 511, a second surface 512, an inner peripheral surface 513, and an outer peripheral surface 514.

The first surface 511 is oriented in a first direction D1. The first direction D1 is one direction in circumferential directions PD along the pitch circle PC (see FIG. 4) of the rolling elements 4. For example, the first surface 511 faces the first rolling elements 41 (see FIG. 4). The first surface 511 is flat.

The second surface 512 is oriented in a second direction D2. The second direction D2 is the direction opposite to the first direction D1 in the circumferential directions PD. In other words, the second direction D2 is the other direction in the circumferential directions PD along the pitch circle PC of the rolling elements 4. The second surface 512 is spaced apart from the first surface 511 in the circumferential directions PD. For example, the second surface 512 faces the second rolling elements 42 (see FIG. 4). The second surface 512 is flat.

The inner peripheral surface 513 of the lubricating portion 51 extends from the first surface 511 to the second surface 512. The inner peripheral surface 513 defines a through hole 515. The through hole 515 penetrates the lubricating portion 51 in the circumferential directions PD. The through hole 515 opens in the first surface 511 and the second surface 512. The through hole 515 penetrates the lubricating portion 51 in the thickness direction. The inner peripheral surface 513 has a circular arc shape in a cross section taken along a plane along the pitch circle PC. The center of the circular arc is located within the through hole 515.

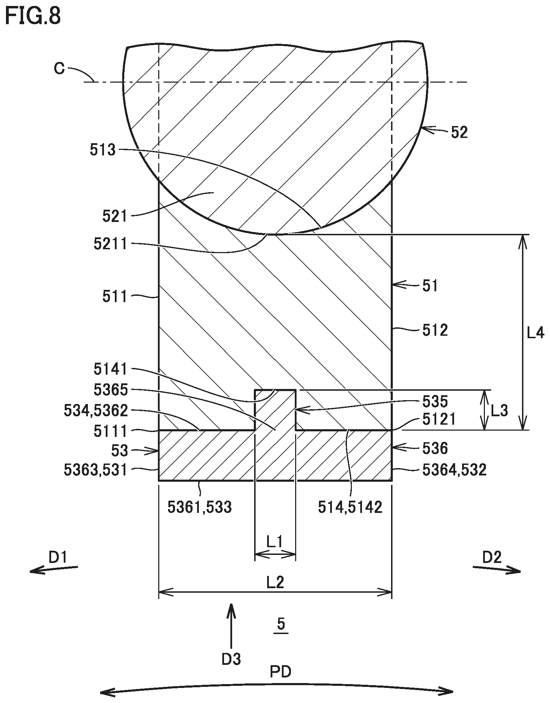

The outer peripheral surface 514 is continuous with outer peripheral edges 5111 and 5121 of the first surface 511 and the second surface 512, respectively. That is, the outer peripheral surface 514 extends from the outer peripheral edge 5111 of the first surface 511 (see FIG. 8) to the outer peripheral edge 5121 of the second surface 512 (see FIG. 8). As illustrated in FIG. 6, the outer peripheral surface 514 extends along circumferential directions PD2 of the separator 5.

As illustrated in FIG. 7, the outer peripheral surface 514 includes a recess 5141. The recess 5141 is located in an intermediate portion of the outer peripheral surface 514 in the circumferential directions PD along the pitch circle PC of the rolling elements 4. Specifically, the recess 5141 is located at the center of the outer peripheral surface 514 in the circumferential directions PD along the pitch circle PC of the rolling elements 4. The recess 5141 is recessed from the perimeter of the recess 5141 toward the center axis C. The perimeter of the recess 5141 is the both side portions of the recess 5141 in the circumferential directions PD along the pitch circle PC of the rolling elements 4. As illustrated in FIG. 6, the recess 5141 is continuous with the entire outer peripheral surface 514 in the circumferential directions PD2 of the separator 5. Only one recess 5141 is included in one outer peripheral surface 514. As illustrated in FIG. 7, the recess 5141 has a rectangular shape in a cross section along the pitch circle PC.

The lubricating portion 51 includes a lubricant and a porous material. For example, the lubricant flows at 25°C. The lubricant includes, for example, lubricating oil.

The porous material retains the lubricant described above. Specifically, the porous material maintains the outer shape of the lubricating portion 51 while retaining the lubricant inside pores thereof. For example, the porous material does not flow at 25°C. The porous material is capable of supplying the lubricant to the rotator 52 described later. A material of the porous material is, for example, a fluorocarbon resin or a polyolefin resin. The material of the porous material is preferably a polyolefin resin.

The Shore hardness of the lubricating portion 51 at 25°C is Shore A50 or more and Shore A70 or less. The Shore hardness of the lubricating portion 51 is measured in accordance with the "durometer hardness test method for plastics" specified in JIS K7215.

### <Rotation Body 52>

The rotation body 52 is located at a center portion of the separator 5. A portion of the rotation body 52 is located inside the through hole 515. The rotation body 52 is rotatably held with respect to the inner peripheral surface 513 of the lubricating portion 51. The rotation body 52 includes a main portion 521, a first projection 522, and a second projection 523.

The main portion 521 is located in the through hole 515 of the lubricating portion 51. A portion of the peripheral surface of the main portion 521 faces the inner peripheral surface 513 of the lubricating portion 51. A portion of the peripheral surface of the main portion 521 is in contact with the inner peripheral surface 513 of the lubricating portion 51. A portion of the peripheral surface of the main portion 521 is in contact with the porous material in the lubricating portion 51.

The first projection 522 is capable of being in contact with the rolling element 4 (see FIG. 4) oriented in the first direction D1 with respect to the first projection 522. The first projection 522 projects from the first surface 511 of the lubricating portion 51. The first projection 522 is continuous with the main portion 521. The first projection 522 is connected to a first end E1 of the main portion 521 in the circumferential directions PD. The first projection 522 is integrated with the main portion 521. The projection length of the first projection 522 from the first surface 511 is 0.1 mm or more and less than 1 mm. The projection length of the first projection 522 is a distance from the first end E1 to the distal end of the first projection 522.

The second projection 523 is capable of being in contact with the rolling element 4 (see FIG. 4) oriented in the second direction D2 with respect to the second projection 523. The second projection 523 projects from the second surface 512 of the lubricating portion 51. The second projection 523 is located on the opposite side of the first projection 522 with respect to the main portion 521. The second projection 523 is continuous with the main portion 521. The second projection 523 is connected to a second end E2 of the main portion 521 in the circumferential directions PD. The second projection 523 is integrated with the main portion 521. The projection length of the second projection 523 from the second surface 512 is equal to as the projection length of the first projection 522. Specifically, the projection length of the second projection 523 from the second surface 512 is 0.1 mm or more and less than 1 mm. The projection length of the second projection 523 is a distance from the second end E2 to the distal end of the second projection 523.

The rotation body 52 is spherical. As illustrated in FIG. 6, the center of the sphere is located on the center axis C described above. As illustrated in FIG. 7, the center of the rotation body 52 is located at the center of the separator 5.

The rotation body 52 has a hardness higher than that of the lubricating portion 51. The Vickers hardness of the rotation body 52 at 25°C is HV 772 or more and HV 900 or less. The Vickers hardness of the rotation body 52 is measured in accordance with the "Vickers hardness test" specified in JIS Z 2244.

A material for the rotation body 52 is a metal, preferably steel. The rotation body 52 is non-porous (or dense).

### <Protective Portion 53>

As illustrated in FIGS. 6 and 7, the protective portion 53 is located on the outer peripheral surface 514 of the lubricating portion 51. The protective portion 53 covers the outer peripheral surface 514 of the lubricating portion 51. Specifically, the protective portion 53 covers the entire outer peripheral surface 514 of the lubricating portion 51. Specifically, the protective portion 53 is not located on any of the first surface 511 and the second surface 512, but is located only on the outer peripheral surface 514. The protective portion 53 has a ring shape. The protective portion 53 has a center axis that coincides with the center axis C of the separator 5. The protective portion 53 includes a fifth surface 531, a sixth surface 532, an outer peripheral surface 533, and an inner peripheral surface 534.

The fifth surface 531 is oriented in the first direction D1. The fifth surface 531 is continuous with the first surface 511 of the lubricating portion 51. The fifth surface 531 is flat. The fifth surface 531 is flush with the first surface 511.

The sixth surface 532 is oriented in the second direction D2. The sixth surface 532 is spaced apart from the fifth surface 531 in the circumferential directions PD. The sixth surface 532 is continuous with the second surface 512 of the lubricating portion 51. The sixth surface 532 is flat. The sixth surface 532 is flush with the second surface 512.

The outer peripheral surface 533 of the protective portion 53 constitutes the outer peripheral surface of the separator 5. The outer peripheral surface 533 connects the outer peripheral edges of the fifth surface 531 and the sixth surface 532. The outer peripheral surface 533 is capable of being in contact with at least one of the outer rolling surface 221 and the inner rolling surface 311 (see FIG. 2). Preferably, the outer peripheral surface 533 is capable of being in contact with both the outer rolling surface 221 and the inner rolling surface 311.

The inner peripheral surface 534 of the protective portion 53 is spaced apart from the outer peripheral surface 533 in the radial direction of the separator 5. The inner peripheral surface 534 connects the inner peripheral edges of the fifth surface 531 and the sixth surface 532. The inner peripheral surface 534 faces the outer peripheral surface 514 of the lubricating portion 51 in the radial direction of the separator 5. Specifically, the inner peripheral surface 534 is in contact with the outer peripheral surface 514 of the lubricating portion 51.

The inner peripheral surface 534 includes a protrusion 535. That is, the protective portion 53 includes the protrusion 535. The protrusion 535 is continuous with the entire inner peripheral surface 534 in the circumferential directions PD2 (rotation directions of the rolling bearing 1) about the center axis A. Only one protrusion 535 is included in one inner peripheral surface 534. The protrusion 535 has a rectangular shape in a cross section along the pitch circle PC. The protrusion 535 fits into the recess 5141. One protrusion 535 fits into one recess 5141.

The protective portion 53 has a hardness higher than that of the lubricating portion 51. Specifically, the Rockwell hardness of the protective portion 53 at 25°C is HRR 123 or more and HRC 27 or less. The protective portion 53 has, for example, a hardness higher than that of the lubricating portion 51 and a hardness lower than that of the rotation body 52. HRR represents a Rockwell hardness measured in accordance with the "determination of plastics hardness" specified in JIS K 7202-2. HRC represents a Rockwell hardness measured in accordance with the "Rockwell hardness test" specified in JIS Z 2245.

A material for the protective portion 53 is, for example, a resin or a metal. The material for the protective portion 53 is preferably a resin from the perspective of obtaining excellent moldability. Examples of the resin include engineering plastics, preferably polyphenylene sulfide resin (PPS) and polyether ether ketone resin (PEEK). The protective portion 53 may be porous or non-porous, preferably non-porous. The non-porous material is a dense material that does not contain pores therein.

### [Details of Protrusion 535]

FIG. 8 is an enlarged cross-sectional view of the protrusion illustrated in FIG. 7. With reference to FIG. 8, the protrusion will be described in detail. As illustrated in FIG. 8, the protective portion 53 includes a base 536 and the protrusion 535 described above.

The base 536 extends along the outer circumference edge 5121 from the outer circumference edge 5111 of the lubricating portion 51. The base 536 has a cylindrical shape having a center axis C that is common to the lubricating portion 51. The base 536 includes a second outer peripheral surface 5361, a second inner peripheral surface 5362, and two end surfaces 5363 and 5364. The second outer peripheral surface 5361 corresponds to the outer peripheral surface of the separator 5 with the circular plate (disc) shape. The second inner peripheral surface 5362 is parallel to the center axis C in a cross section including the center axis C. The second inner peripheral surface 5362 extends from the outer peripheral edge 5111 of the first surface 511 toward the outer peripheral edge 5121 of the second surface 512 in the cross section including the center axis C. Specifically, the second inner peripheral surface 5362 has a linear shape parallel to the center axis C in the cross section including the center axis C. The second inner peripheral surface 5362 is positioned in contact with the main outer peripheral surface 5142 (a region of the outer peripheral surface 514 excluding the recess 5141). The main outer peripheral surface 5142 is an outer peripheral surface included in the lubricating portion 51. The main outer peripheral surface 5142 is located atboth the first direction D1 and the second direction D2 when seen from the recess 5141. The end surface 5363 corresponds to the fifth surface 531. The end surface 5364 corresponds to the sixth surface 532.

The protrusion 535 is connected to a center portion 5365 of the second inner peripheral surface 5362. The protrusion 535 extends from the center portion 5365 toward the main portion 521. Specifically, the protrusion 535 extends from the center portion 5365 toward a region (proximal region) 5211 closest to the center portion 5365 in the peripheral surface of the main portion 521.

A first proportion, which is the ratio (L1/L2) of a length L1 of the protrusion 535 to a length L2 of the base 536 in the circumferential directions PD, is 0.01 or more, and may be 0.1 or more. If the first proportion is greater than or equal to the above-mentioned lower limit, the volume of the lubricating portion 51 does not excessively decrease, allowing the lubricating portion 51 to supply a sufficient amount of the lubricant to the rotation body 52. The first proportion is 0.9 or less, may be less than 0.5, and may be 0.3 or less. If the first proportion is less than or equal to the above-mentioned upper limit, the strength of the protrusion 535 can be increased. The length L2 of the base 536 in the circumferential directions PD is a distance from the end surface 5363 to the end surface 5364. The length L1 of the protrusion 535 in the circumferential directions PD corresponds to the width of the protrusion 535.

A second proportion, which is the ratio (L3/L4) of a length L3 of the protrusion 535 to a length L4 of the lubricating portion 51 in the radial direction, is 0.01 or more, and may be 0.1 or more. If the second proportion is greater than or equal to the above-mentioned lower limit, detachment of the protective portion 53 from the lubricating portion 51 can be further suppressed. The second proportion is less than 0.5, may be 0.4 or less, and may be 0.3 or less. The protrusion 535 whose second proportion is less than or equal to the above-mentioned upper limit is suitable for the protective portion 53. The length L3 of the protrusion 535 in the radial direction is the length of the protrusion 535 in a direction D3 (projecting direction D3) in which the protrusion 535 extends. The length L4 in the lubricating portion 51 in the radial direction is a distance from the second inner peripheral surface 5362 to the peripheral surface (proximal region 5211) of the main portion 521.

### [Method for Assembling Rolling Bearing 1]

To assemble the rolling bearing 1, the outer ring 2, the inner ring 3, the plurality of rolling elements 4, and the plurality of separators 5 are prepared.

### <Preparation of Separators 5>

To prepare the separators 5, for example, the rotation body 52 and the protective portion 53 molded into the above shape are first prepared, and then, the rotation body 52 is placed inside the protective portion 53 with a space therebetween. Thereafter, a resin composition is placed between the protective portion 53 and the rotation body 52. The resin composition includes, for example, a lubricant, a material for the porous material, and a pore-forming agent. The material for the porous material has a particle shape at 25°C. The average particle size of the material for the material for the porous material is, for example, 0.01 µm or more and 100 µm or less. In the layout of the protective portion 53, the rotation body 52, and the resin composition, a mold die may be used. The mold die has cavities corresponding to the rotation body 52, the lubricating portion 51, and the protective portion 53.

Subsequently, the resin composition is heated (sintered). Accordingly, the pore-forming agent is removed, the porous material is molded, and the lubricant is retained within the pores of the porous material. That is, the lubricating portion 51 including the lubricant and the porous material that retains the lubricant is molded.

Thereafter, the rotation body 52 is rotated with respect to the lubricating portion 51, and thereby, fixation of the rotation body 52 to the lubricating portion 51 is canceled, allowing the rotation body 52 to be rotatable relatively to the lubricating portion 51. In this manner, the separators 5 are prepared.

The plurality of rolling elements 4 and the plurality of separators 5 are placed between the outer ring 2 and the inner ring 3.

### [Variations]

The rolling bearing 1 may include only the first rolling elements 41 without the second rolling elements 42. In this variation, the rotation axes of the first rolling elements 41 (rollers) and the rotation axes of the rolling bearing 1 are both parallel to the center axis A of the rolling bearing 11. In this variation, the rolling bearing 1 is a single-row roller bearing.

The rolling elements 4 are spherical. In this variation, the rolling bearing 1 is a ball bearing.

The lubricating portion 51 may have a rectangular shape.

The lubricating portion 51 may be made of only a lubricant that is solid (does not have fluidity) at room temperature (25°C). That is, in this variation, the lubricating portion 51 includes only the lubrication with no porous material.

The lubricating portion 51 may include the protrusion 535, and the protective portion 53 may include the recess 5141.

The plurality of protrusions 535 may be arranged to be spaced apart from one another in the circumferential directions PD. The plurality of recesses 5141 may be arranged to be spaced apart from one another in the circumferential directions PD.

The plurality of protrusions 535 may be arranged to be spaced apart from one another in the rotation directions (circumferential directions) PD2 of the rolling bearing 1. The plurality of recesses 5141 may be arranged to be spaced apart from one another in the rotation directions (circumferential directions) PD2 of the rolling bearing 1.

The lubricating portion 51 may include a first projection and a first recess, and the protective portion 53 may include a second protrusion and a second recess. The first protrusion fits into the second recess. The second protrusion fits into the first recess.

The lubricating portion 51 may not include the protrusion or the recess 5141. The protective portion 53 may not include the protrusion 535 or the recess.

The protective portion 53 may be located in an outer peripheral end portion of the first surface 511 or an outer peripheral end portion of the second surface 512, in addition to the outer peripheral surface 514 of the lubricating portion 51.

The rolling bearing 1 may include the separators 5 disclosed here and another second separator. In this variation, the separators 5 and the second separator are arranged in the circumferential directions about the center axis A. The second separator does not include a rotation body. The second separator has a circular plate shape. For example, the second separator includes only a lubricating portion and a protective portion. For example, the second separator includes only a lubricating portion and a rotation body.

### [First Variation]

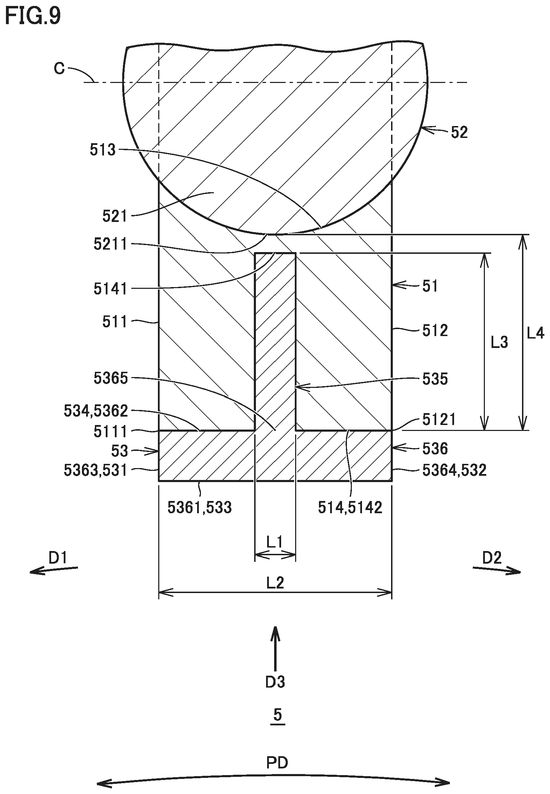

FIG. 9 is an enlarged cross-sectional view of a protrusion of a first variation. With reference to FIG. 9, a protrusion 535 of the first variation will be described in detail. As illustrated in FIG. 9, the protective portion 53 includes the base 536 and the protrusion 535.

In this variation, the second proportion (L3/L4) is 0.5 or more, may be 0.6 or more, may be 0.7 or more, and may be 0.8 or more. If the second proportion is greater than or equal to the above-mentioned lower limit, movement of the rotation body 552 by the protrusion 535 can be more reliably suppressed. The second proportion may be 0.95 or less, and may be 0.9 or less. If the second proportion is less than or equal to the above-mentioned upper limit, the lubricant can be reliably supplied from the lubricating portion 51 between the protrusion 535 and the main portion 521 to the main portion 521.

### [Second Variation]

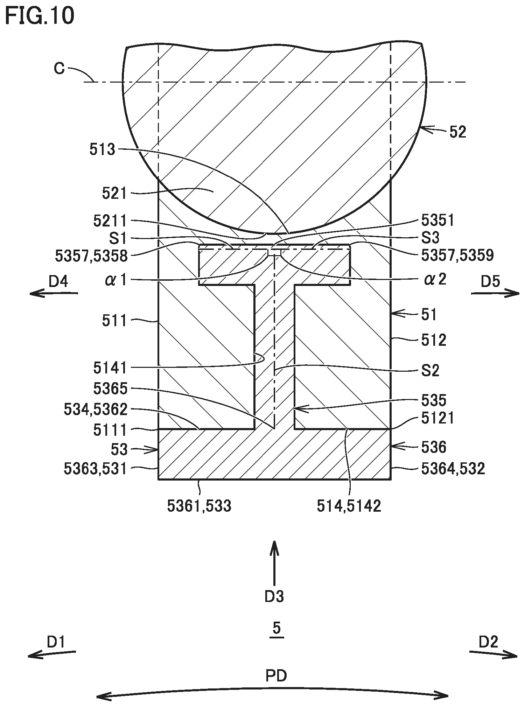

FIG. 10 is an enlarged cross-sectional view of a protrusion of a second variation. With reference to FIG. 10, a protrusion 535 of the second variation will be described in detail. As illustrated in FIG. 10, the protrusion 535 includes a third portion 5356 and a fourth portion 5357.

The third portion 5356 extends from the base 536 toward the main portion 521. The third portion 5356 has a linear shape extending from the base 536 to the proximal region 5211 of the main portion 521 in a cross section including the center axis C.

The fourth portion 5357 is connected to a distal end 5351 of the third portion 5356. The fourth portion 5357 extends in each of a fourth direction D4 and a fifth direction D5. Each of the fourth direction D4 and the fifth direction D5 intersects with the third direction D3. The third direction D3 is a direction in which the third portion 5356 extends. In this second variation, each of the fourth direction D4 and the fifth direction D5 is perpendicular to the third direction D3 in a cross section including the center axis C1. The fifth direction D5 is a direction opposite to the fourth direction D4. The fourth portion 5357 includes a first part 5358 and a second part 5359.

The first part 5358 extends in the fourth direction D4. The first part 5358 extends from the distal end 5351 toward the first surface 511. The first part 5358 extends to form a right angle with the third direction D3. In other words, an angle α1 formed by a line segment S1 connecting the distal end 5351 of the third portion 5356 and a distal end portion of the first part 5358, and a line segment S2 connecting the distal end 5351 of the third portion 5356 and the center portion 5365, is a right angle.

The second part 5359 extends in the fifth direction D5. The second part 5359 extends from the distal end 5351 toward the second surface 512. The second part 5359 extends to form a right angle with respect to the third direction D3. In other words, an angle α2 formed by a line segment S3 connecting the distal end 5351 of the third portion 5356 and a distal end portion of the second part 5359, and the line segment S2, is a right angle. The fourth portion 5357 has a linear shape in a cross section including the center axis C.

### [Third Variation]

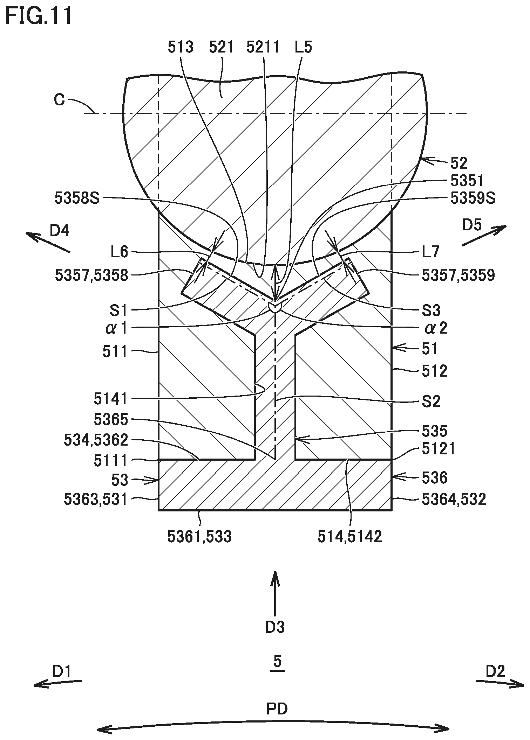

FIG. 11 is an enlarged cross-sectional view of a protrusion of a third variation. With reference to FIG. 11, a protrusion 535 of the third variation will be described in detail. As illustrated in FIG. 11, the fourth portion 5357 extends to form an obtuse angle with respect to the third direction D3.

The first part 5358 extends to form an obtuse angle with respect to the third direction D3. In other words, an angle α1 formed by the line segment S1 and the line segment S2 is obtuse. In this variation, the angle α1 is 100 degrees or more and 160 degrees or less. A distance L6 between the first part 5358 and the main portion 521 is less than or equal to a distance L5 between the main portion 521 and the distal end 5351. The first part 5358 has a first opposing surface 5358S. The first opposing surface 5358S is parallel to the tangent of a portion of the peripheral surface of the main portion 521 facing the first part 5358.

The second part 5359 extends to form an obtuse angle with respect to the third direction D3. In other words, an angle α2 formed by the line segment S1 and the line segment S3 is obtuse. In this variation, the angle α2 is 100 degrees or more and 160 degrees or less. A distance L7 between the second part 5359 and the main portion 521 is less than or equal to the distance L5. The second part 5359 has a second opposing surface 5359S. The second opposing surface 5359S is parallel to the tangent of a portion of the peripheral surface of the main portion 521 facing the second part 5359. In this third variation, the distances L6 and L7 between the fourth portion 5357 and the main portion 521 are less than or equal to the distance L5 between the main portion 521 and the distal end 5351.

### [Fourth Variation]

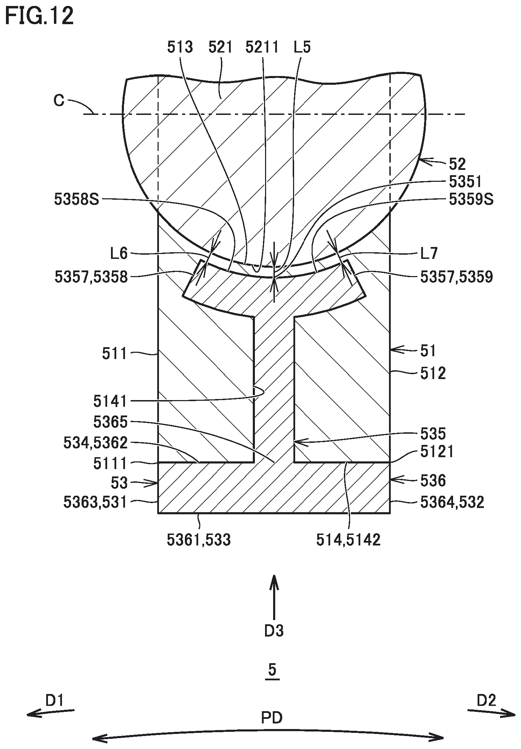

FIG. 12 is an enlarged cross-sectional view of a protrusion of a fourth variation. With reference to FIG. 12, a protrusion 535 of the fourth variation will be described in detail. As illustrated in FIG. 12, the fourth portion 5357 extends from the distal end 5351 along the circumferential surface of the main portion 521. The fourth portion 5357 curves along the circumferential surface of the main portion 521. Each of the distance L6 and the distance L7 is equal to the distance L5. The distances L6 and L7 are the same. Each of the first opposing surface 5358S and the second opposing surface 5359S is a curved surface.

### [Further Variations of Second through Fourth Variations]

The fourth portion 5357 may include only the first part 5358 and may not include the second part 5359.

It should be understood that the embodiments disclosed here are illustrative and non-restrictive in every respect. The scope of the present invention is defined by the claims and is intended to include any modifications within the scope and meaning equivalent to the claims.

### Description of Reference Numerals

1 rolling bearing, 2 outer ring, 3 inner ring, 4 rolling element, 5 separator, 11 rolling bearing, 21 outer peripheral surface, 22 inner peripheral surface, 23 body, 24 lid, 25 pin, 31 outer peripheral surface, 32 inner peripheral surface, 41 first rolling element, 42 second rolling element, 51 lubricating portion, 52 rotation body, 53 protective portion, 211 first through hole, 212 second through hole, 213 third through hole, 221 outer rolling surface, 222 relief groove, 223 seal groove, 224 outer raceway groove, 241 fourth through hole, 311 inner rolling surface, 312 relief groove, 313 inner raceway groove, 511 first surface, 512 second surface, 513 inner peripheral surface, 514 outer peripheral surface, 515 through hole, 521 main portion, 522 first projection, 523 second projection, 531 fifth surface, 532 sixth surface, 533 outer peripheral surface, 534 inner peripheral surface, 535 protrusion, 536 base, 552 rotation body, 2211 first rolling surface, 2212 second rolling surface, 3111 third rolling surface, 3112 fourth rolling surface, 5111 outer peripheral edge, 5121 outer peripheral edge, 5141 recess, 5142 main outer peripheral surface, 5211 proximal region, 5351 distal end, 5356 third portion, 5357 fourth portion, 5358 first portion, 5358S first opposing surface, 5359 second portion, 5359S first opposing surface, 5361 second outer peripheral surface, 5362 second inner peripheral surface, 5363 end surface, 5364 end surface, 5365 center portion, A center axis, B raceway, C center axis, C1 center axis, D1 first direction, D2 second direction, D3 third direction, D4 fourth direction, D5 fifth direction, E1 first end, E2 second end, L5 distance, L6 distance, L7 distance, P plane, PC pitch circle, PD circumferential direction, PD2 circumferential direction, S1 line segment, S2 line segment, S3 line segment, α1 angle, α2 angle.

## Claims

1. A rolling bearing comprising:
an outer ring having an outer rolling surface included in an inner peripheral surface of the outer ring;
an inner ring located on an inner peripheral side of the outer ring, and having an inner rolling surface, the inner rolling surface being included in an outer peripheral surface of the inner ring and facing the outer rolling surface, the inner ring having a center axis that coincides with a center axis of the outer ring;
a plurality of rolling elements located between the outer ring and the inner ring, the rolling elements being capable of rolling with respect to the inner rolling surface and the outer rolling surface; and
a separator located between the outer ring and the inner ring and located between adjacent ones of the rolling elements, wherein
the separator includes
a lubricating portion having a first surface, a second surface, an inner peripheral surface, and an outer peripheral surface, and including a lubricant, the first surface being oriented in a first direction in circumferential directions along a pitch circle of the rolling elements, the second surface oriented in a second direction opposite to the first direction in the circumferential directions, the inner peripheral surface extending from the first surface to the second surface, the outer peripheral surface being continuous with outer peripheral edges of the first surface and the second surface,
a rotation body rotatably retained with respect to the inner peripheral surface of the lubricating portion, including a main portion, a first projection, and a second projection, and having a hardness higher than a hardness of the lubricating portion, the main portion being located in a through hole defined by the inner peripheral surface of the lubricating portion and being in contact with the inner peripheral surface of the lubricating portion, the first projection being continuous with the main portion and projecting from the first surface, the second projection being continuous with the main portion and projecting from the second surface, and
a protective portion located on the outer peripheral surface of the lubricating portion and having a hardness higher than the hardness of the lubricating portion.

2. The rolling bearing according to claim 1, wherein the rotation body is spherical.

3. The rolling bearing according to claim 1 or 2, wherein the lubricating portion further includes a porous material that retains the lubricant and is capable of supplying the lubricant to the rotation body.

4. The rolling bearing according to claim 1 or 2, wherein a material for the rotation body is a metal.

5. The rolling bearing according to claim 1 or 2, wherein a material for the protective portion is a resin or a metal.

6. The rolling bearing according to claim 1 or 2, wherein the lubricating portion has a ring shape.

7. The rolling bearing according to claim 1 or 2, wherein
one of the lubricating portion and the protective portion includes a protrusion, and
another of the lubricating portion and the protective portion includes a recess in which the protrusion fits.

8. The rolling bearing according to claim 7, wherein the protrusion or the recess is continuous with the entire outer peripheral surface of the lubricating portion in a circumferential direction about the center axis.

9. The rolling bearing according to claim 1, wherein
the protective portion includes
a base, and
a protrusion projecting from the base toward the main portion of the rotation body.

10. The rolling bearing according to claim 9, wherein
the projection includes
a third portion extending from the base toward the main portion, and
a fourth portion connected to a distal end portion of the third portion and extending in a direction intersecting with a direction in which the third portion extends.

11. The rolling bearing according to claim 10, wherein
the fourth portion includes
a first part extending from the distal end portion toward the first surface, and
a second part extending from the distal end portion toward the second surface.

12. The rolling bearing according to claim 10, wherein the fourth portion extends to form a right angle or an obtuse angle with respect to the direction in which the third portion extends.

13. The rolling bearing according to claim 10, wherein the fourth portion extends to form a right angle with respect to the direction in which the third portion extends.

14. The rolling bearing according to claim 11, wherein the fourth portion extends such that a distance between the fourth portion and the main portion is less than or equal to a distance between the distal end and the main portion.

15. The rolling bearing according to claim 1 or 2 comprising a plurality of separators.
